(19) Europäisches Patentamt
European Patent Office
Office européen des brevets

(11) EP 1 555 831 A2

(12) EUROPEAN PATENT APPLICATION

(43) Date of publication:
20.07.2005 Bulletin 2005/29

(51) Int Cl.⁷: H04N 7/26

(21) Application number: 05250077.4

(22) Date of filing: 10.01.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 13.01.2004 JP 2004006129

(71) Applicant: SONY CORPORATION
Tokyo 141 (JP)

(72) Inventors:
• Ogawa, Kaname
  Shinagawa-ku Tokyo 141 (JP)
• Seki, Takahito
  Shinagawa-ku Tokyo 141 (JP)

(74) Representative: Mills, Julia et al
D Young & Co
120 Holborn
London EC1N 2DY (GB)

(54) Still picture and moving picture encoding method and apparatus

(57) Disclosed is a picture encoding apparatus in which, in the encoding rich in predictive modes, the volume of codes generated may be estimated highly accurately prior to encoding, and in which the encoding processing in the encoding means and step may be carried out under optimum control of, for example, the picture quality, compression ration or the rate. An encoder 12 applies encoding processing, rich in predictive modes, such as MPEG4 AVC, having orthogonal cosine transform, as a main function, to an input picture signal VIN (picture being encoded) from an input terminal 11. A predictor for the volume of codes generated 18 predicts the volume of codes generated BIT(N) in the encoder 12, based on the prediction residues obtained on applying the intra-frame and inter-frame predictive processing to the input picture signal VIN. The encoding controller 19 uses the volume of codes generated BIT (N), predicted by the predictor for the volume of codes generated 18, for controlling the encoding in the encoder 12.

FIG.3

## Description

This invention relates to a picture encoding apparatus, a picture encoding method, and to a picture encoding program. More particularly, embodiments of the present invention relate to a picture encoding apparatus, a picture encoding method, and to a picture encoding program, which may conveniently be used for recording moving or still pictures on a recording medium, such as a magnetic tape, a magnetic disc, an optical disc or a magneto-optical disc, or for transmitting the moving or still pictures over a transmission medium for a TV conference system or a telephone system capable of picture transmission/ reception.

This application claims priority of Japanese Patent Application No.2004-006129, filed on January 13, 2004, the entirety of which is incorporated by reference herein.

In digitizing moving pictures and recording or transmitting the so digitized moving pictures, the conventional practice is to compress picture data by encoding, in consideration of the exorbitant data volume. As typical of the encoding for moving pictures, there is known a motion compensated predictive encoding system.

The motion compensated predictive encoding is an encoding method exploiting picture correlation along time axis, and generates a predicted picture by detecting the motion vector of a picture to be encoded (picture being encoded, that is, a current frame) with respect to a picture for reference (reference picture, that is, a reference frame), and by motion compensating the reference picture, already encoded and decoded, in accordance with the motion vector. The prediction residues of the picture being encoded, with respect to the predicted picture, are found, and the prediction residues as well as the motion vector are encoded to compress the information volume of the moving picture.

The motion compensated predictive coding may be exemplified by encoding by MPEG (Moving Pictures Experts Group). In the MPEG, one field or frame is split into macro-blocks, each composed of 16 lines by 16 pixels. The motion compensated predictive coding is carried out in terms of this macro-block as a unit.

The motion compensated predictive coding may roughly be classified into two encoding systems, that is, intra-coding and inter-coding. In the intra-coding, the information of an own frame or field is directly encoded, insofar as a macro-block being encoded is concerned, whereas, in the inter-coding, a frame (or a field) differing in time from an own frame or field is used as a reference picture, and the difference between the predicted picture generated from the reference picture and the information of the own frame or field is encoded.

In MPEG, each frame is encoded as one of an I-picture (intra-coded picture), a P-picture (predictive coded picture) and a B-picture (bidirectional predictive coded picture). Moreover, in MPEG, processing is carried out in terms of a GOP (Group of Pictures) as a unit.

In case encoded data, obtained on processing on the GOP basis, are recorded on a recording medium, or are transmitted, the volume of as-encoded data needs to be less than the recording capacity of the recording medium, or less than the transmission capacity of the communications network, as the high quality of the as-expanded or as-decoded picture is maintained.

For this reason, in compression encoding moving or still pictures by e.g. MPEG, referred to above, it has been necessary, from the perspective of controlling the picture quality or the bit rate, to make a correct estimation of the volume of codes to be generated of a picture or field, about to be encoded, before proceeding to actual encoding.

For accurately estimating the volume of codes generated, there is known a method in which, prior to encoding per se, provisional encoding is carried out, using a provisional parameter, in order to make an estimation of the volume of generated codes. However, with the use of this method, the processing volume for encoding is well-nigh doubled. Additionally, with the use of this method, the power consumption is increased e.g. with a battery-driven mobile device, thus increasing the frequency of the charging operations.

Thus, a technique in which the volume of codes generated is directly estimated from the residues of motion prediction, for example, instead of carrying out encoding twice, such that encoding needs to be carried out only once, has been disclosed by the present Assignee by WO98/26599 (JP Patent JP-A-H-10-526505). Meanwhile, the MPEG2 (ISO/IEC 13818-2), as a sort of MPEG, is defined as the universal picture encoding system, and is currently used for a broad range of both the professional and consumer applications, as a standard encompassing both the interlaced scanning and progressive scanning and also encompassing both the standard resolution pictures and high definition pictures. With the use of the MPEG2 compression system, a high compression ratio and a superior picture quality may be achieved by allocating the code volume (bit rate) of 4 to 8 Mbps or the code volume of 18 to 22 Mbps for a picture by interlaced scanning with the standard resolution with e.g. 720 by 480 pixels or for a picture by interlaced scanning with the high resolution with e.g. 1920 by 1088 pixels, respectively.

Although MPEG2 is mainly intended for high picture quality encoding, mainly used for broadcasting, it is not up to an encoding system with a code volume (bit rate) lower than that of MPEG 1, that is, an encoding system of a higher compression ratio. As the mobile terminals have become popular, the needs for such encoding system are felt to be increasing in future. In this consideration, the MPEG4 encoding system has been standardized. As for the picture encoding system, the standard was recognized in December 1998 as ISO/IEC 14496-2 as an international standard.

Recently, attempts in standardizing H.264 (ITU-T Q6/16 VCEG) are being made with a view to picture encoding for a TV conference system at the outset. It has been known that, with H.264, as compared to the conventional encoding system, exemplified by MPEG2 or MPEG4, the processing volume for encoding or decoding is larger, however, a higher encoding efficiency may be achieved. On the other hand, attempts are also being made by JVT (Joint video Team), as a part of the MPEG4 activities, to formulate a new standard, with a view to achieving a higher encoding efficiency, by adopting the functions not supported by H.264 into H.264 as basis.

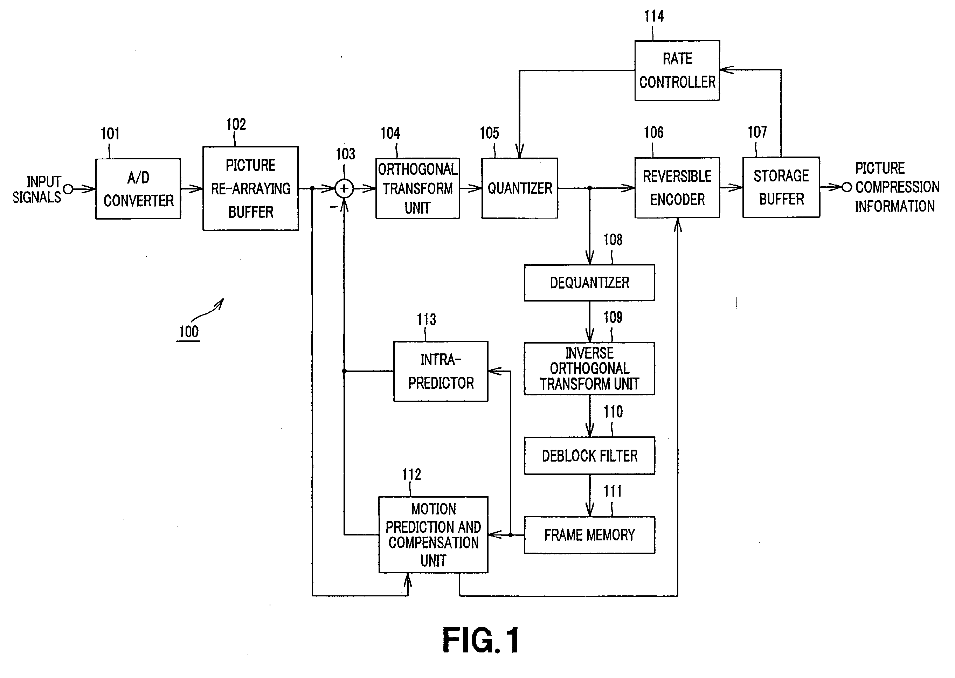

A picture encoding apparatus, as a specified example of employing the encoding system currently standardized by JVT (referred to below as JVT Codec or H.264|MPEG-4 AVC) is hereinafter explained. Fig.1 depicts a block diagram of a picture information encoding apparatus for implementing picture compression by orthogonal transform, such as discrete cosine transform or Karhunen-Loeve transform, and motion compensation.

Referring to Fig. 1, a picture encoding apparatus 100 is made up by an A/D (analog/digital) converter 101, a picture re-arraying buffer 102, an adder 103, an orthogonal transform unit 104, a quantizer 105, a reversible encoder 106, a storage buffer 107, a dequantizer 108, an inverse orthogonal transform unit 109, a deblock filter 110, a frame memory 111, a motion prediction/compression unit 112, an intra-prediction unit 113, and a rate controller 114.

In Fig.1, the A/D converter 101 converts an input picture signal into a digital signal. The picture re-arraying buffer 102 is responsive to a GOP (group of pictures) structure of the picture compression information output from the picture encoding apparatus 100 to re-array the frames. The picture re-arraying buffer 102 sends the picture information of an entire frame to the orthogonal transform unit 104, insofar as a picture subjected to intra (intra-picture) encoding is concerned. The orthogonal transform unit 104 applies orthogonal transform, such as discrete cosine transform or Karhunen-Loeve transform, to the picture information, to send transform coefficients to the quantizer 105. The quantizer 105 quantizes the transform coefficients supplied thereto from the orthogonal transform unit 104.

The reversible encoder 106 applies reversible coding, such as variable length coding or arithmetic coding, to the quantized transform coefficients, to route the encoded transform coefficients to the storage buffer 38 for storage therein. These encoded transform coefficients are output as picture compression information.

The behavior of the quantizer 105 is controlled by the rate controller 114. Moreover, the quantizer 105 sends as-quantized transform coefficients to the dequantizer 108, which dequantizer 108 dequantizes the transform coefficients. The inverse orthogonal transform unit 109 applies inverse orthogonal transform processing to the dequantized transform coefficients to generate the decoded picture information. The deblock filter 101 applies the processing of removing block distortion from the decoded picture information to send the information to the frame memory 111 for storage therein.

On the other hand, the picture re-arraying buffer 102 sends the picture information to the motion prediction and compensation unit 112, as long as a picture subjected to inter-coding (inter-picture coding) is concerned. The motion prediction and compensation unit 112 takes out from the frame memory 111 the picture information, referenced simultaneously, and applies the motion prediction and compensation processing to the picture information thus taken out to generate the reference picture information. The motion prediction and compensation unit 112 sends the reference picture information to the adder 103 where the reference picture information is converted into the difference information from the picture information in question. The motion prediction and compensation unit 112 simultaneously outputs the motion vector information to the reversible encoder 106.

This reversible encoder 106 applies reversible encoding processing, such as variable length encoding or arithmetic encoding, to the motion vector information, to form the information to be inserted into a header part of the picture compression information. The other processing is similar to that for the picture compression information subjected to intra-frame coding and hence is not explained specifically.

In the encoding system, currently being standardized by the JVT (referred to below as JVT Codec), an intra-predictive encoding is used in effecting intra-coding, in which a predicted picture is generated from pixels in the neighbourhood of a block to encode the difference. That is, in a picture to be subjected to intra-coding, a predicted picture is generated from pixel values in the neighbourhood of the pixel block being encoded, and the difference from the predicted picture is encoded. The dequantizer 108 and the inverse orthogonal transform unit 109 dequantize and inverse orthogonal transform an intra-coded pixel, respectively, while the adder 110 sums an output of the inverse orthogonal transform unit 109 to the predicted picture used in encoding the pixel block to route the sum to the frame memory 111 for storage therein. For a pixel block for intra-coding, the intra-predictor 113 reads out near-by pixels, stored in the frame memory 111, to generate a predicted picture. As for the intra-predicted mode, used for generating the predicted picture, it is subjected to reversible coding processing in the variable encoder 106 and output as it is included in the picture compression processing.

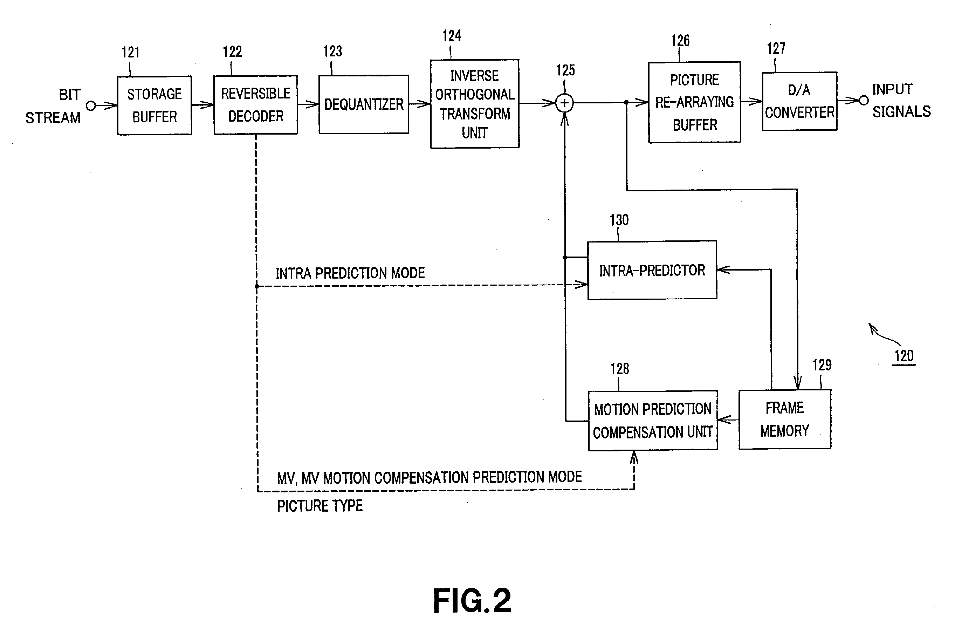

Fig.2 shows a schematic structure of a picture information decoding apparatus as a counterpart of the picture encoding apparatus 100. Referring to Fig.2, a picture decoding apparatus 120 includes a storage buffer 121, a reversible decoder 122, a dequantizer 123, an inverse orthogonal transform unit 124, an adder 125, a picture re-arraying buffer 126, a D/A (digital/analog) converter 127, a motion prediction compensation unit 128, a frame memory 129 and an intra-predictor 130.

In Fig.2, the storage buffer 121 transiently holds the input picture compression information and then transmits the stored information to the reversible decoder 122. The reversible decoder 122 applies e.g. variable length decoding or arithmetic decoding, to the picture compression information, to route the quantized transform coefficients to the dequantizer 123. In case a frame in question is an inter-coded frame, the reversible decoder 122 also decodes the motion vector information stored in a header of the picture compression information, and routes the so decoded information to the motion prediction compensation unit 128.

The dequantizer 123 dequantizes the as-quantized transform coefficients, supplied thereto from the reversible decoder 122, and sends the transform coefficients to the inverse orthogonal transform unit 124. This inverse orthogonal transform unit 124 applies inverse orthogonal transform, such as inverse discrete cosine transform or inverse Karhunen-Loeve transform, to the transform coefficients, based on the preset format of the picture compression information.

In case the frame in question is intra-coded, the inverse orthogonal-transformed picture information is stored in the picture re-arraying buffer 126 and output following the D/A conversion by the D/A converter 127.

If, on the other hand, the frame in question is inter-coded, the motion prediction compensation unit 128 generates the reference information, based on the reversibly decoded motion vector information and on the picture information stored in the frame memory 129 to route the so generated reference information to the adder 125. The adder 125 synthesizes this reference information to an output of the inverse orthogonal transform unit 124. The processing is otherwise the same as that for the intra-coded picture and hence no detailed explanation is made for simplicity.

The intra-predictive coding is used in JVT Codec, so that, if the frame in question has been intra-coded, the intra-predictor 130 reads out a picture from the frame memory 129, and generates a predicted picture in accordance with the intra-predicting mode in which the reversible decoding is carried out by the reversible decoder 122. The adder 125 sums the output of the inverse orthogonal transform unit 124 to the predicted picture.

The picture encoding apparatus 100 and the picture information decoding apparatus 120 are described in, for example, the following Patent Publications 2 and 3.

[Patent Publication 1] WO98/26599 (Japanese Patent Application H10-526505)
[Patent Publication 2] Japanese Laid-Open Patent publication 2001-199818
[Patent Publication 3] Japanese Laid-Open Patent publication 2002-20953

Meanwhile, if the method described in the Patent Publication 1 is applied to encoding rich in prediction modes, such as MPEG4-AVC, shown in Fig.1, an error is increased in particular as compared to that in the conventional MPEG system. Additionally, if the above method is used, motion prediction may fall short of expectations, in case of a scene change, with the motion prediction residues increasing to disable correct estimation of the volume of generated codes.

In view of the above-depicted status of the art, embodiments of the present invention seek to provide a method and an apparatus for picture encoding, and a program for picture encoding, by means of which, in the encoding rich in prediction modes, the volume of codes generated may be estimated highly accurately prior to encoding, and by means of which the encoding processing may be carried out as optimum or at least improved control is managed for the picture quality, compression ratio and the rate.

The picture encoding apparatus according to an aspect of the present invention comprises encoding means for applying a compression encoding processing, rich in predictions, employing orthogonal transform and motion compensation, to an input picture signal, code volume predicting means for predicting the volume of codes generated, and control means for employing the volume of codes generated, as predicted by the code volume predicting means, for controlling the encoding processing in the encoding means. The code volume predicting means predicts the volume of codes generated in the encoding means based on prediction residues obtained on applying intra-frame and/or inter-frame predictive processing to the input picture signal.

The control means uses the volume of codes generated, as predicted by the code volume prediction means, for controlling the encoding processing in the encoding means.

The picture encoding method and program according to further aspects of the present invention include an encoding step of applying compression encoding processing, rich in predictions, employing orthogonal transform and motion compensation, to an input picture signal, a code volume predicting step of predicting the volume of codes generated, and a control step of employing the volume of codes generated, as predicted by the code volume predicting step, for controlling the encoding processing in the encoding step. The code volume predicting step predicts the volume of codes generated in the encoding step based on prediction residues obtained on applying intra-frame and/or inter-frame predictive processing to the input picture signal.

The control step uses the volume of codes generated, as predicted by the code volume prediction step, for controlling the encoding processing in the encoding step.

With the picture encoding apparatus according to embodiments of the present invention, the encoding means applies a compression encoding processing, rich in predictions, employing orthogonal transform and motion compensation, to an input picture signal, the code volume predicting means predicts the volume of codes generated, the code volume predicting means predicting the volume of codes generated in the encoding means based on prediction residues obtained on applying intra-frame and/or inter-frame predictive processing to the input picture signal, and the control means employs the volume of codes generated, as predicted by the code volume predicting means, for controlling the encoding processing in the encoding means. Thus, in the encoding rich in prediction modes, the volume of codes generated may be estimated to high accuracy prior to encoding, such that encoding processing in the encoding means may be carried out under optimum control of, for example, the picture quality, compression ratio or the rate.

With the picture encoding method and the picture encoding program, according to embodiments of the present invention, the encoding step applies compression encoding processing, rich in predictions, employing orthogonal transform and motion compensation, to an input picture signal, the code volume predicting step predicts the volume of codes generated, in the encoding step, based on prediction residues obtained on applying intra-frame and/or inter-frame predictive processing to the input picture signal, and the control step employs the volume of codes generated, as predicted by the code volume predicting step, for controlling the encoding processing in the encoding step. Thus, in the encoding rich in prediction modes, the volume of codes generated may be estimated to high accuracy prior to encoding, such that encoding processing in the encoding means may be carried out under optimum control of, for example, the picture quality, compression ratio or the rate.

The invention will now be described by way of example with reference to the accompanying drawings, throughout which like parts are referred to by like references, and in which:

Fig. 1 is a block diagram of a conventional picture encoding apparatus.

Fig.2 is a block diagram showing a picture decoding apparatus.

Fig.3 is a block diagram of a picture encoding apparatus according to a first embodiment of the present invention.

Fig.4 is a circuit diagram showing an inner structure of a predictor for predicting the volume of codes generated.

Fig.5 illustrates the method for estimating the volume of the codes generated in the predictor.

Fig.6 is a flowchart showing the processing sequence in a picture encoding apparatus.

Fig.7 is a flowchart showing the processing for generating prediction residues.

Fig.8 is a block diagram of a picture encoding apparatus according to a second embodiment of the present invention.

Fig.9 is a block diagram of a picture encoding apparatus according to a third embodiment of the present invention.

Fig. 10 is a block diagram of a picture encoding apparatus according to a fourth embodiment of the present invention.

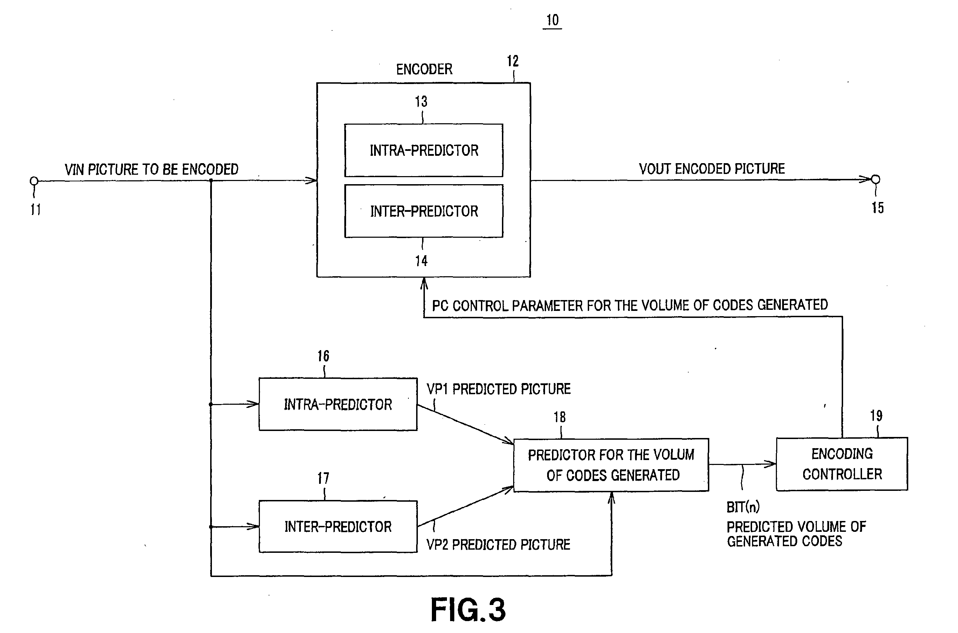

In the following, certain preferred embodiments of the present invention are explained. The first embodiment is a picture encoding apparatus 10 shown in Fig.3. This picture encoding apparatus 10 includes an encoder 12, a predictor for the volume of codes generated 18, and an encoding controller 19. The encoder is used for applying the encoding processing, rich in prediction modes, such as MPEG4 AVC, and having orthogonal cosine transform, as a main function, to input picture signals VIN (a picture to be encoded) from an input terminal 11. The predictor for the volume of codes generated 18 predicts a volume of codes generated BIT (N) in the encoder 12, based on residues predicted by applying intra-frame prediction and inter-framer prediction to the input picture signals VIN. The encoding controller 19 uses the volume of codes generated BIT(N), as predicted by the predictor for the volume of codes generated 18, for controlling the encoding processing in the encoder 12.

The encoder 12 includes an intra-predictor 13 for carrying out intra-frame prediction, in terms of blocks of 4 by 4, 8 by 8 or 16 by 16 pixels as a unit, and an inter-predictor 14 for carrying out inter-frame prediction. The picture encoding apparatus 10 includes, apart from the intra-predictor 13 and the inter-predictor 14, an intra-predictor 16 and an inter-predictor 17, provided outside the encoder 12. The intra-predictor 16 and the inter-predictor 17, provided outside the encoder 12, find intra-prediction residues and inter-prediction residues, in terms of blocks of 4 by 4, 8 by 8 or 16 by 16 pixels, or super-blocks, each composed of several blocks, as a unit, respectively, as will be explained subsequently.

The input picture signals VIN (a picture to be encoded), entered to the picture encoding apparatus 10 from an input terminal 11, are sent to the encoder 12, intra-predictor 16, inter-predictor 17 and to the predictor for the volume of codes generated 18.

The intra-predictor 13 of the encoder 12 generates an intra-frame predicted picture from already encoded pixel values, in the vicinity of the pixel blocks of the input picture signals VIN, to be intra-frame encoded, in order to calculate the difference thereof from the intra-frame predicted picture. The inter-predictor 14 of the encoder 12 calculates the difference between a reference picture and a picture to be encoded.

The intra-predictor 16 outside of the encoder 12 generates an intra-frame predicted picture VP1 from already encoded pixel values, in the vicinity of the pixel blocks of the input picture signals VIN, to be intra-frame encoded, to output the so generated intra-frame predicted picture to the predictor for the volume of codes generated 18. The inter-predictor 17 generates an inter-frame predicted picture VP2 from the difference between the reference picture and the picture to be encoded, in order to output the so generated intra-frame predicted picture VP1 to the predictor for the volume of codes generated 18.

The predictor for the volume of codes generated 1 uses, as prediction residues BD(n), intra-frame prediction residues E1, as intra-frame prediction residues against the input picture signals VIN of the intra-frame predicted picture VPI, representing the results of intra-frame prediction processing, or inter-frame prediction residues E1, as inter-frame prediction residues against the input picture signals VIN of the inter-frame predicted picture VP2, representing the results of inter-frame prediction processing, whichever are smaller. The predictor for the volume of codes generated 18, which will be explained in detail subsequently, predict an unknown volume of codes generated BIT(n), as now to be encoded, using the known prediction residues and the known volume of codes generated of a picture, already encoded, and also using the prediction residues BD(n) of the picture as now to be encoded, obtained as described above.

The encoding controller 19 receives the predicted unknown volume of codes generated BIT(n) from the predictor for the volume of codes generated 18, and generates a control parameter for the volume of codes generated PC, for controlling the encoding processing in the encoder 12, in order to output the so generated parameter to the encoder 12. This control parameter for the volume of codes generated PC is used for controlling the picture quality, compression ratio and the rate during the encoding processing in the encoder 12.

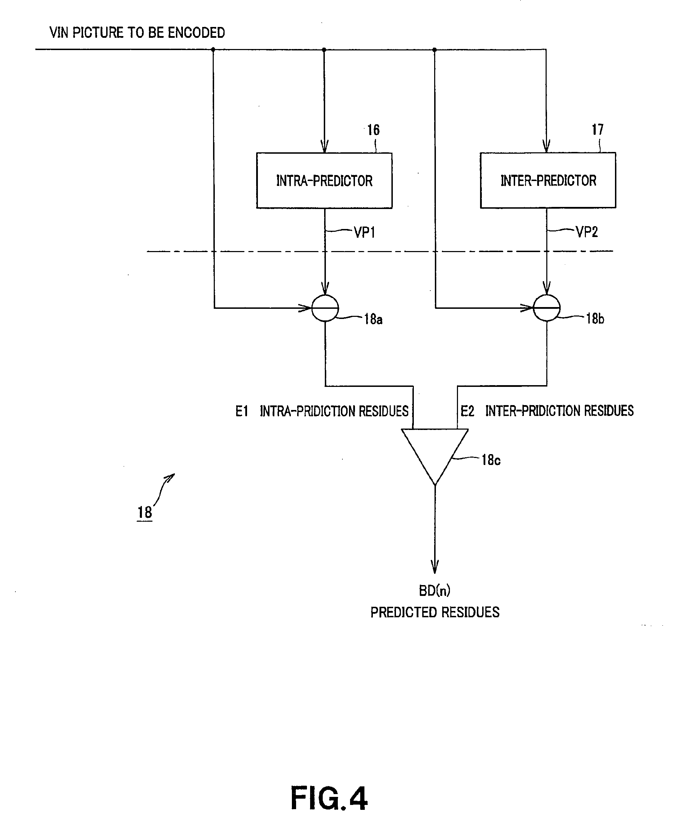

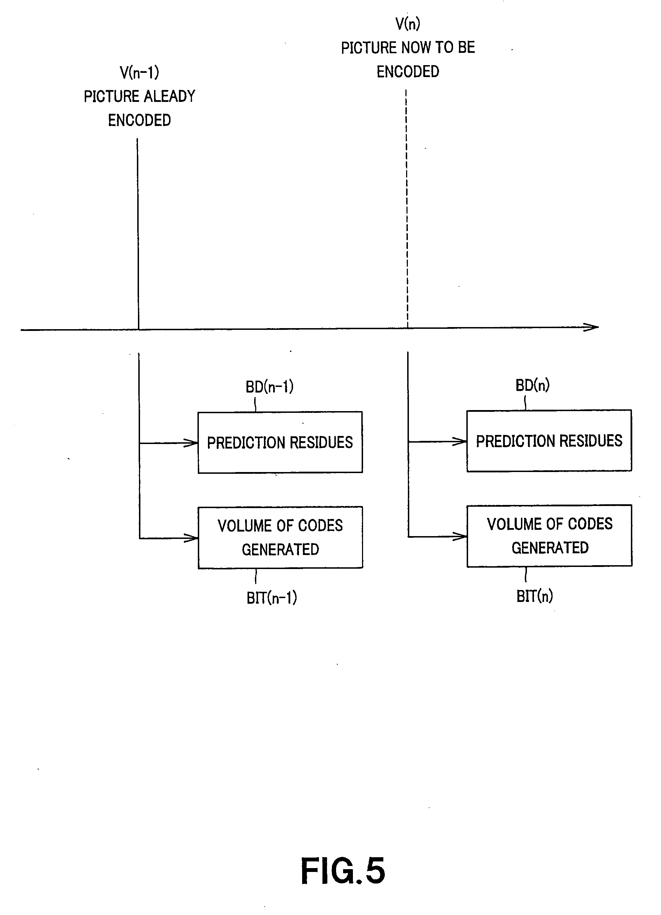

Referring to Figs.4 and 5, the operation of the predictor for the volume of codes generated 18 is explained in detail. Referring to Fig.4, the predictor for the volume of codes generated 18 calculates, prior to the encoding by the encoder 12 of the block contained in the input picture signals VIN, the difference between the input picture signals VIN and the intra-frame predicted picture VP1, output from the intra-predictor 16, by a subtractor 18a, to output resulting intra-frame prediction residues E1 to a comparator 18c. The predictor for the volume of codes generated 18 also calculates, by a subtractor 18b, a difference between the input picture signals VIN and an inter-picture predicted picture VP2, output from the inter-predictor 17, to output resulting inter-frame prediction residues E2 to the comparator 18c. The comparator 18c compares the intra-frame prediction residues E1 to the inter-frame prediction residues E2 to generate the intra-frame prediction residues E1 or the inter-frame prediction residues E2, whichever are smaller in magnitude or in absolute value, as prediction residues BD(n).

Using the prediction residues BD(n), the predictor for the volume of codes generated 18 estimates the volume of codes generated BIT(n) of the picture V (n) now to be encoded. Fig.5 shows a method for estimating the volume of codes generated BIT(n), using the prediction residues BD(n), prior to encoding by the encoder 12. In Fig.5, V(n-1) is a picture already encoded, V(n) is a picture as now to be encoded, BD(n-1) is prediction residues of the picture already encoded V(n-1), BIT(n-1) is the volume of codes already encoded of the picture V(n-1), already encoded, BD(n) is prediction residues of the picture V(n) as now to be encoded, and BIT (n) is the volume of codes of the picture V(n) as now to be encoded.

In case a given picture has been encoded, the volume of codes BIT(n-1) of the picture V(n-1) encoded and the prediction residues BD(n-1) at this time are saved. Prior to encoding the picture V(n), as now to be encoded, the prediction residues BD(n) are found by a method shown in Fig.4. The volume of codes generated BIT(n) of the picture V(n), about to be encoded, may be approximately estimated by a recurrence formula

$$BIT(n) = (BD(n)/BD(n-1))BIT(n-1) \qquad (1)$$

using the prediction residues BD(n) of the picture V(n), prior to actual encoding.

Meanwhile, the method for estimating the volume of generated codes is effective when applied to each picture type defined on a compression system by which encoding is to be made. For example, in the case of MPEG, the volume of generated codes may be estimated for each of the I, P and B pictures, in accordance with

$$BIT\_I(n) = (BD(n)/BD(n-1))BIT\_I(n-1) \qquad (2)$$

$$BIT\_P(n) = (BD(n)/BD(n-1))BIT\_P(n-1) \qquad (3)$$

$$BIT\_B(n) = (BD(n)/BD(n-1))BIT\_B(n-1) \qquad (4).$$

It is noted that the equations (2), (3) and (4) stand for an I-picture, a P-picture and a B-picture, respectively.

In the picture encoding apparatus 10, the volume of the codes generated may be separately estimated for respective picture types, as indicated in the above equations (2), (3) and (4), or the equation (1) may collectively be applied to a set of plural picture types. The same picture type may be sub-divided depending on characteristic points. The equations (1) to (4) may be corrected as necessary.

It is noted that, at the leading end of a sequence, such as at the beginning of a scene, there lacks a picture encoded in the past, and hence the method explained using the equation (1) may directly not be applied. If no encoding was made in the past, estimation may directly be made using an estimation function f by a form

$$BIT(0) = f(BD(0)) \qquad (5)$$

using prediction residues found as shown in Fig.4. The estimation function f may be selected optionally.

In the case of a scene change, it may be an occurrence that the volume of codes generated BIT(n) is hardly predictable, with the method explained using the equation (1), because of an excessively large difference from the picture encoded in the past. In such case, the equations (1) to (4) may be suitably corrected or the volume of codes generated BIT(n) may be estimated by the method employing the equation (5). The scene change may, for example, be detected by checking the prediction residues of the picture from time to time as to whether or not any significant change has occurred.

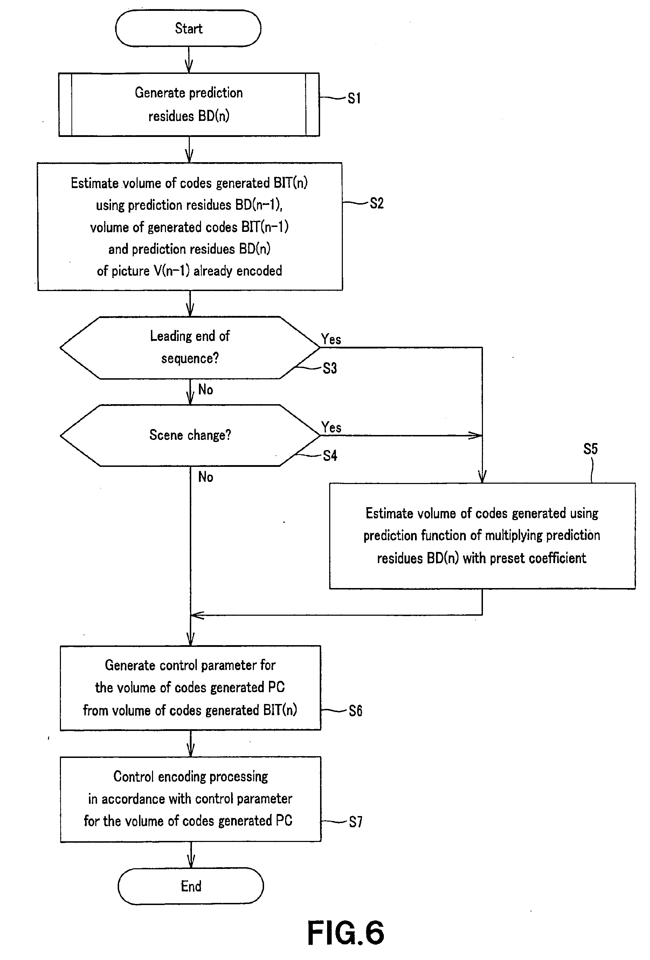

Fig.6 collectively shows a set of processing procedures in the picture encoding apparatus 10 explained in the foregoing. Of course, these processing procedures illustrate picture encoding methods or picture encoding programs carried out in executing the above-described picture encoding operations by a computer system. In case a CPU of a computer system sequentially reads out and executes a picture encoding program of the processing procedure shown in Fig.6, stored e.g. in a HDD, the operation carried out on the picture encoding apparatus 10 may similarly be carried out on the computer system.

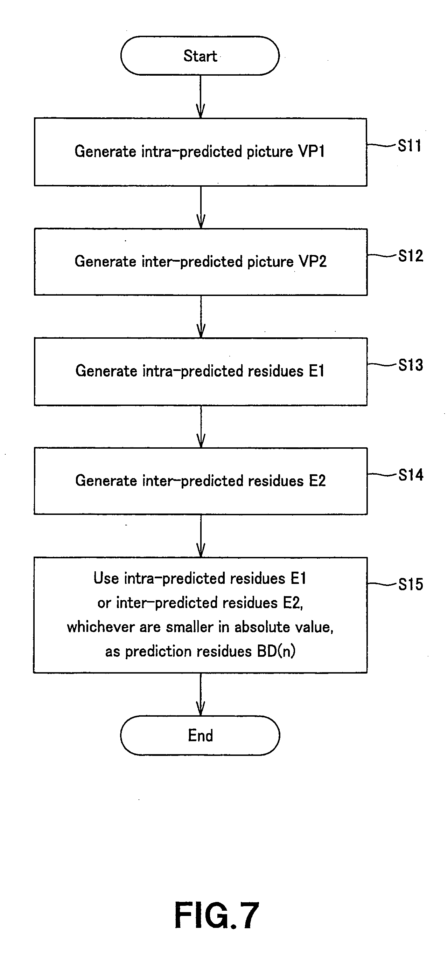

First, in a step S1, the prediction residues BD (n) are generated. In a subroutine of the step S1, an intra-frame predicted picture VP1 is generated (step S11) and an inter-frame predicted picture VP2 is generated (step S12), as shown in Fig.7. Then, intra-frame prediction residues E1 are generated from the intra-frame predicted picture VP1 and from the input picture signals VIN (step S13), and inter-frame prediction residues E2 are generated from the inter-frame predicted picture VP2 and from the input picture signals VIN (step S 14). The intra-frame prediction residues E1 or the inter-frame prediction residues E2, whichever are smaller in absolute value, are used as prediction residues BD (n).

In a step S2 of Fig.6, the prediction residues BD(n-1) and the volume of codes generated BIT(n-1) of the picture V(n-1), already encoded, and the prediction residues BD(n), generated in the step S1, are used to estimate the volume of codes generated BIT(n).

If, in the next step S3, a system controller, not shown, of the picture encoding apparatus 10 or a CPU of a computer system detects that control is at the leading end of a given sequence, processing transfers to a step S5 to estimate the volume of codes generated BIT (0), using the estimation function f of multiplying the prediction residues BD(n) with a preset coefficient, as shown in Fig.7.

If, in a step S4, the system controller, not shown, of the picture encoding apparatus 10 or the CPU of the computer system detects that a scene change has occurred, processing transfers to a step S5 to estimate the volume of codes generated BIT(0), using the estimation function f of multiplying the prediction residues BD(n) with a preset coefficient. In such case, the equations (1) to (4) may be suitably corrected as necessary. The scene change may, for example, be detected by checking the prediction residues of the picture from time to time for any significant change.

If the system controller or the CPU has determined that, in the step S3, control is not at the leading end of the sequence or that, in the step S4, control is not at a scene change, or if, in the step S5, control is at the leading end of the sequence or at a scene change, the volume of codes generated is estimated, using the equation (5), and processing transfers subsequently to a step S6.

In the step S6, the control parameter for the volume of codes generated PC is generated, using the volume of codes generated BIT(n) estimated in the step S2 or the volume of codes generated BIT(O) estimated in the step S5. In the next step S7, the picture quality, compression ratio or the rate is controlled for encoding processing in the encoder 12, in accordance with the control parameter for the volume of codes generated PC.

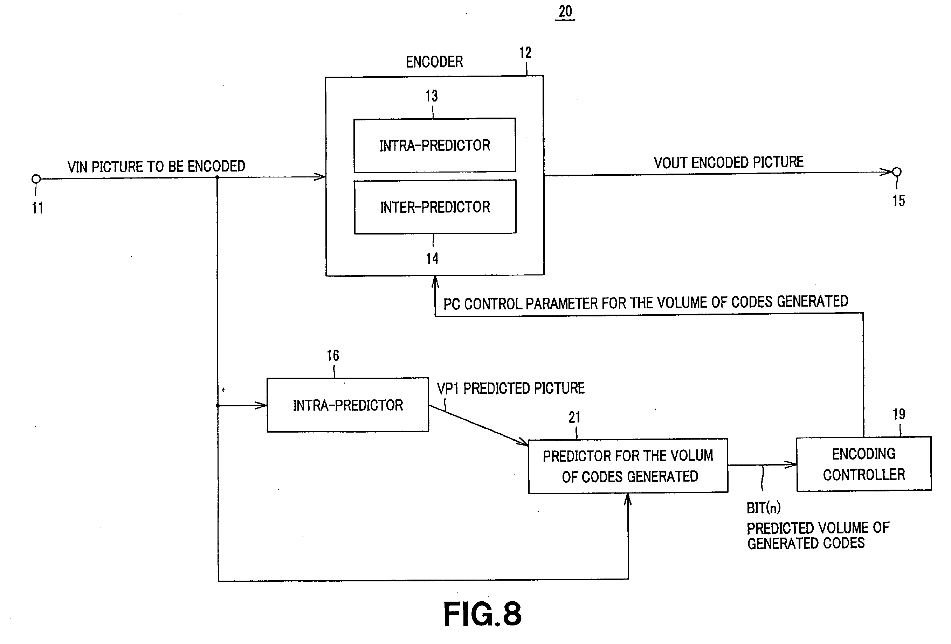

In the picture encoding apparatus 10, the intra-predictor 16 and the inter-predictor 17 are provided outside the encoder 12, in addition to the intra-predictor 13 and the inter-predictor 14 of the encoder 12. The present invention is not limited to solely the picture encoding apparatus 10 of the first embodiment described above. For example, a picture encoding apparatus 20, according to a second embodiment of the present invention, shown in Fig.8, is provided only with the intra-predictor 16 outside the encoder 12. In this picture encoding apparatus 20, a predictor for the volume of codes generated 21 estimates the volume of codes generated BIT(n), using the intra-frame predicted picture VP1, as found by the intra-predictor 16. Specifically, the predictor for the volume of codes generated 21 estimates the difference between the intra-frame predicted picture VP1 from the intra-predictor 16 and the input picture signals VIN as prediction residues BD(n).

As a modification of the picture encoding apparatus 20 of the second embodiment, solely the inter-predictor 17, shown in Fig.3, may be used in place of the intra-predictor 16.

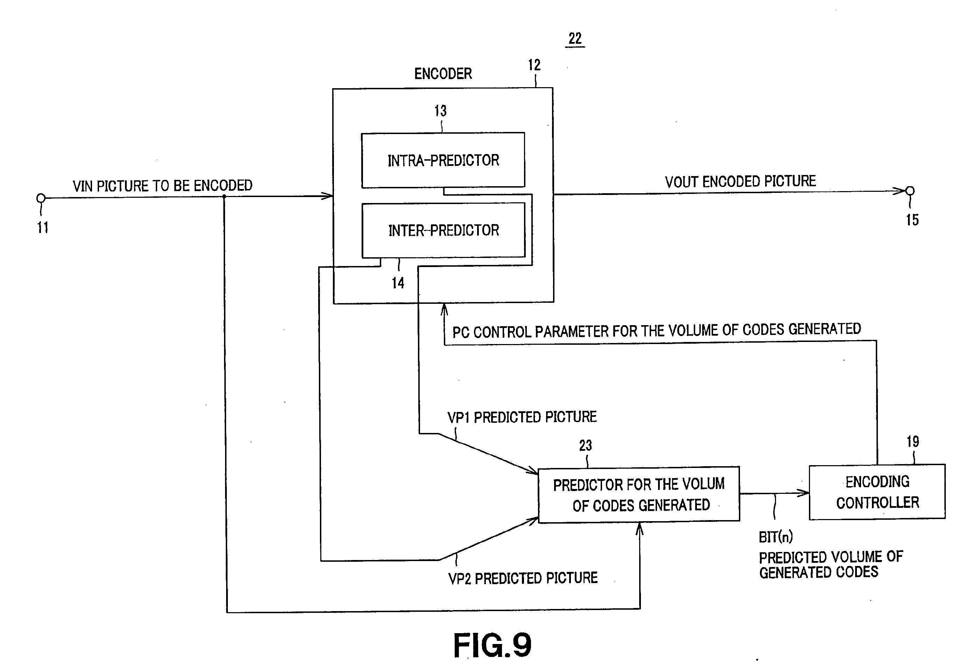

A picture encoding apparatus 22, according to a third embodiment of the present invention, shown in Fig.9, is not provided with an intra-predictor nor with an inter-predictor, and estimates the volume of codes generated BIT(n), by a predictor for the volume of codes generated 23, using the intra-frame predicted picture VP1 and the inter-frame predicted picture VP2, obtained by intra-predictor 13 and inter-predictor 14, provided within the encoder 12, respectively. As a modification, only the intra-frame predicted picture VP1 from the intra-predictor 13 may be provided to the predictor for the volume of codes generated 23, or only the inter-frame predicted picture VP2 from the inter-predictor 14 may be provided to the predictor for the volume of codes generated 23.

As a further modification, the intra-predictor 16 and the inter-predictor 17, shown in Fig.3, may be used within the encoder 12. In this case, the encoder 12 is not provided with an inner intra-predictor 13 nor with an inter-predictor 14.

In Fig.3, the intra-predictor 16 and the inter-predictor 17, provided outside the encoder 12, may be replaced by components correlated with or having a tendency approximately similar to these predictors 16, 17.

Stated differently, the predictor for the volume of codes generated 18 uses, in addition to using the aforementioned intra-frame and/or inter-frame prediction processing output, an intra-frame approximate value processing output and/or an inter-frame approximate value processing output, in order to obtain the aforementioned prediction residues. The intra-frame approximate value processing output and the inter-frame approximate value processing output are characteristic values showing approximately a similar tendency to the intra-frame and/or inter-frame prediction processing output. The intra-frame approximate value processing output and the inter-frame approximate value processing output are obtained by intra-frame approximate value collection means and by inter-frame approximate value collection means, respectively.

In this case, the predictor for the volume of codes generated 18 uses the results of the intra-frame approximate value processing or the results of the inter-frame approximate value processing, whichever are smaller, as the aforementioned prediction residues. The predictor for the volume of codes generated 18 predicts an unknown volume of codes, as now to be generated, using the known prediction residues and the known volume of generated codes of a picture already encoded, and the prediction residues of a picture as now to be encoded.

In case at least one of the intra-frame approximate value processing output and the inter-frame approximate value processing output is used, the predictor for the volume of codes generated 18 corrects the approximate value processing output and subsequently acquires the aforementioned prediction residues to predict the volume of generated codes based on the prediction residues. In particular, if a decimated value is used as at least one of the intra-frame approximate value processing output and the inter-frame approximate value processing output, the approximate value processing output is corrected, the aforementioned prediction residues are then acquired and the volume of codes generated is predicted based on the predicted residues.

In this case, the encoding controller 19 uses the predicted volume of the codes generated for picture quality control, rate control and/or compression ratio control in the encoder 12. In the leading end of a sequence, the predictor for the volume of codes generated 18 predicts an unknown volume of the codes generated of a picture, as now to be encoded, using a prediction function of multiplying the so acquired prediction residues of the picture, as now to be encoded, with a preset coefficient. In case of a scene change, the predictor for the volume of codes generated 18 predicts an unknown volume of the codes generated of a picture, as now to be encoded, by applying correction processing to the so acquired prediction residues of the picture about to be encoded.

In case of a scene change, the predictor for the volume of codes generated 18 predicts an unknown volume of the codes generated of a picture, as now to be encoded, by applying the same prediction function as that used for the leading end of the sequence to the prediction residues acquired of the picture about to be encoded. The prediction residues, obtained by the predictor for the volume of codes generated 18, are also used for detecting a scene change.

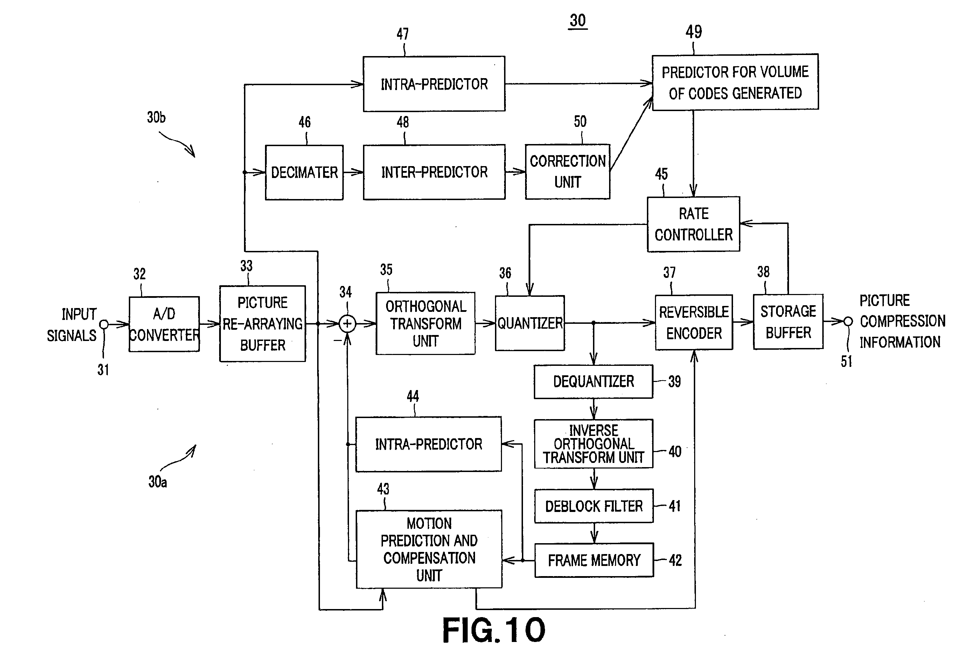

A picture encoding apparatus in which an embodiment of the present invention is applied to MPEG4 AVC, implementing picture compression by orthogonal transform, such as Karhunen-Loeve transform, and motion compression (fourth embodiment) is now explained. Referring to Fig.10, a picture encoding apparatus 30 includes an encoder 30a (shown on the lower side of a chain-dotted line in Fig. 10) and a code volume prediction and controller 30b (shown on the upper side of the chain-dotted line in Fig. 10). The encoder 30a encodes input picture signals (picture for encoding) VIN, entered from an input terminal 31, using an intra-predictor 44 and a motion prediction and compensation unit 43, adapted for applying intra-frame predictive coding and inter-frame predictive coding to the input picture signals, respectively. The code volume prediction and controller 30b is made up by a predictor for the volume of codes generated 49 for predicting the volume of codes generated BIT(N) in the encoder 30a based on prediction residues obtained on applying intra-frame and inter-frame prediction processing to the input picture signals VIN, and a rate controller 45 employing the volume of codes generated BIT(N) predicted by the predictor for the volume of codes generated 49 for controlling the rate of coding processing in the encoder 30a.

The picture encoding apparatus 30 also includes, in addition to the intra-predictor 44 and the motion prediction and compensation unit 43, an A/D (analog/digital) converter 32, a picture re-arraying buffer 33, an adder 34, an orthogonal transform unit 35, a quantizer 36, a reversible encoder 37, a storage buffer 38, a dequantizer 39, an inverse orthogonal transform unit 40, a deblock filter 41, a frame memory 42, a motion prediction/ compression unit 43, and an intra-predictor 44. These components together make up the encoder 30a.

The picture encoding apparatus 30 also includes, in addition to a predictor for the volume of codes generated 49 and a rate controller 45, an intra-predictor 47, a decimator 46, an inter-predictor 48 and a correction unit 50. These components together make up the code volume prediction and controller 30b.

The operation of the picture encoding apparatus 30 is now explained. First, the encoder 30a is explained. In Fig. 10, the A/D converter 32 converts picture signals, entered from the input terminal 31, into digital signals. The picture re-arraying buffer 33 re-arrays frames responsive to a GOP (group-of-pictures) structure of the picture compression information output from the picture encoding apparatus 30.

The picture re-arraying buffer 33 sends the picture information of an entire frame to the orthogonal transform unit 35, as long as a picture subjected to intra-frame (intra-picture) encoding, is concerned. The orthogonal transform unit 35 applies orthogonal transform, such as discrete cosine transform or Karhunen-Loeve transform, to the picture information, to send transform coefficients, resulting from the transform, to the quantizer 36. The quantizer 36 applies quantization processing to the transform coefficients sent from the orthogonal transform unit 35.

The reversible encoder 37 applies reversible coding, such as variable length coding or arithmetic coding, to the quantized transform coefficients, to route the so encoded transform coefficients to the storage buffer 38 for storage therein. These encoded transform coefficients are output as picture compression information from an output terminal 51.

The behavior of the quantizer 36 is controlled by the rate controller 45. Moreover, the quantizer 36 sends as-quantized transform coefficients to the dequantizer 39, which dequantizer 39 dequantizes the transform coefficients. The inverse orthogonal transform unit 40 applies inverse orthogonal transform processing to the dequantized transform coefficients to generate the decoded picture information. The deblock filter 41 applies the processing of removing block distortion to the decoded picture information to send the resultant information to the frame memory 42 for storage therein.

On the other hand, the picture re-arraying buffer 33 sends the picture information to the motion prediction and compensation unit 43, as long as a picture subjected to inter-coding is concerned. The motion prediction and compensation unit 43 takes out from the frame memory 42 the picture information, referenced simultaneously, and applies the motion prediction and compensation processing to the picture information thus taken out to generate the reference picture information.

The reference picture information is sent to the adder 34 where it is converted into the difference information from the picture information in question. The motion prediction and compensation unit 43 simultaneously outputs the motion vector information to the reversible encoder 37. This reversible encoder 37 applies reversible encoding processing, such as variable length encoding or arithmetic encoding, to the motion vector information, in order to form the information to be inserted into a header part of the picture compression information. The other processing is similar to that for the picture compression information subjected to intra-frame coding.

The operation of the code volume prediction/ control unit 30b is now explained. An output from the picture re-arraying buffer 33 is supplied to the intra-predictor 47. An output of the picture re-arraying buffer 33 is entered to the inter-predictor 48 after decimation by the decimator 46. The intra-predictor 47 generates an intra-frame predicted picture from the already encoded pixel values in the vicinity of a pixel block for intra-frame encoding of picture signals, entered from the picture re-arraying buffer 33, and outputs the so generated intra-frame predicted picture to the predictor for the volume of codes generated 49. The inter-predictor 48, on the other hand, decimates picture signals from the picture re-arraying buffer 33 to a picture of a smaller size by the decimater 46 and subsequently generates an inter-frame predicted picture form the difference between the reference picture and the picture being encoded. By this size change, it is possible with the inter-predictor 48 to reduce the processing volume for prediction. An output of the intra-predictor 47 is entered to the predictor for the volume of codes generated 49 for comparison. However, if the picture size is changed by the decimator 46 and the inter-frame predicted picture from the inter-predictor 48 is then directly entered to the predictor for the volume of codes generated 49 for comparison, the two outputs cannot be compared directly to each other because of the difference in size. Hence, in order to provide for direct comparison of the output from the inter-predictor 48 and that from the intra-predictor 47, the correction unit 50 is connected to the inter-predictor 48, and the inter-frame predicted picture, the size of which has been changed, is first corrected and subsequently is compared to the output of the intra-predictor 47, in the predictor for the volume of codes generated 49, in order to predict the volume of the codes generated of the picture now to be encoded. The method explained with reference to Figs.4 and 5 may be applied mutatis mutandis to the processing for predicting the volume of the codes generated in the predictor for the volume of codes generated 49, provided, however, that the decimator 46 and the correction unit 50 are connected forward and back of the inter-predictor 17 in Fig.4.

The volume of generated codes, estimated by the predictor for the volume of codes generated 49, is supplied to the rate controller 45. The rate controller 45 generates a parameter for the volume of codes generated, which parameter is supplied to the quantizer 36 to control the encoding rate.

In the picture encoding apparatus 30 of the present fourth embodiment, the decimator 46 and the correction unit 50 are provided forward and back of the inter-predictor 48 to diminish the processing volume for prediction. It is however possible to omit the decimator 46 and the correction unit 50 and to generate an inter-frame predicted picture directly from the output of the picture re-arraying buffer 33 by the inter-predictor 48 to enter the so generated inter-frame predicted picture to the predictor for the volume of codes generated 49.

In the code volume prediction/ control unit 30b, it is possible to provide only the intra-predictor 47, as in the above-described second embodiment (Fig.8), in which case the predictor for the volume of codes generated 49 estimates the volume of codes generated using the intra-frame prediction residues as found by the intra-predictor 47. Of course, the code volume prediction/ control unit 30b may be provided not with the intra-predictor 47 but with only the inter-predictor 48.

The intra-predictor 47 may be used simultaneously as the intra-predictor 44. The intra-predictor 44 may also be omitted, in which case the results of the intra-predictor 47 may be used. Similarly, the inter-predictor 48 may be used simultaneously as the motion prediction and compensation unit 43. The motion prediction and compensation unit 43 may also be omitted, in which case the results of the inter-predictor 48 may be used.

In the present picture encoding apparatus 30, the intra-predictor 47 and the inter-predictor 48, provided outside the encoder 30a, may be replaced by components having a tendency approximately similar to or correlated with these predictors 47, 48.

Stated differently, the predictor for the volume of codes generated 49 uses, in place of using the aforementioned intra-frame and/or inter-frame prediction processing output, an intra-frame approximate value processing output and/or an inter-frame approximate value processing output, which are characteristic values showing approximately a similar tendency to the intra-frame and/or inter-frame prediction processing output, in order to obtain the aforementioned prediction residues. The intra-frame approximate value processing output and the inter-frame approximate value processing output are obtained by intra-frame approximate value collection means and by inter-frame approximate value collection means, respectively. The processing carried out in the predictor for the volume of codes generated 49 has already been explained as a modification of the picture encoding apparatus 10 shown in Fig.3 and hence is not explained here specifically.

Embodiments of the present invention are featured by the fact that, in a picture encoding apparatus and in a picture encoding method, employing encoding means and an encoding step, applying compression encoding which uses orthogonal transform and motion compensation rich ins prediction to input picture signals, the volume of codes generated in past encoding is used for predicting the volume of codes generated for a picture or a field being encoded.

Embodiments of the present invention are featured by the fact that, in a picture encoding apparatus and in a picture encoding method employing encoding means and an encoding step, applying compression encoding, which uses orthogonal transform and motion compensation rich in prediction, to input picture signals, the intra-frame prediction, the inter-frame prediction, approximate values or values correlated thereto, are combined together to find the prediction residues at the time of scene change correctly.

Various respective aspects and features of the invention are defined in the appended claims. Features from the dependent claims may be combined with features of the independent claims as appropriate and not merely as explicitly set out in the claims.

**Claims**

1. A picture encoding apparatus comprising
   encoding means for applying a compression encoding processing, rich in predictions, employing orthogonal transform and motion compensation, to an input picture signal;
   code volume predicting means for predicting the volume of codes generated, said code volume predicting means predicting the volume of codes generated in said encoding means based on prediction residues obtained on applying intra-frame and/or inter-frame predictive processing to said input picture signal; and
   control means for employing the volume of codes generated, as predicted by said code volume predicting means, for controlling the encoding processing in said encoding means.

2. The picture encoding apparatus according to claim 1 wherein said code volume predicting means uses intra-frame prediction residues of an intra-frame predicted picture, with respect to said input picture, as being the result of said intra-frame predictive processing, or inter-frame prediction residues of an inter-frame predicted picture, with respect to said input picture, as being the result of said inter-frame predictive processing, whichever are smaller, as said prediction residues.

3. The picture encoding apparatus according to claim 1 wherein said code volume predicting means predicts an unknown volume of codes generated of a picture now to be encoded, using known prediction residues and a known volume of codes generated of a picture already encoded and said prediction residues as obtained of the picture now to be encoded.

**4.** The picture encoding apparatus according to claim 1 wherein said prediction residues, based on which the code volume predicting means predicts the volume of codes generated, are obtained by intra-frame or inter-frame prediction processing means provided outside of said encoding means.

**5.** The picture encoding apparatus according to claim 1 wherein said prediction residues, based on which the code volume predicting means predicts the volume of codes generated, are obtained by intra-frame or inter-frame prediction processing means provided within said encoding means.

**6.** The picture encoding apparatus according to claim 4 or 5 wherein said intra-frame or inter-frame prediction processing means finds said prediction residues in terms of a macro-block or a super-block, composed of several macroblocks, grouped together, as a unit.

**7.** The picture encoding apparatus according to claim 1 wherein, in case a decimated value is used as at least one of the intra-frame prediction processing output and the inter-frame prediction processing output, said decimated value of the processing output is first corrected and said prediction residues are then obtained to predict the volume of codes generated based on said prediction residues.

**8.** The picture encoding apparatus according to claim 1 wherein said code volume predicting means uses, in addition to using the aforementioned intra-frame and/or inter-frame prediction processing output, an intra-frame approximate value processing output and/or an inter-frame approximate value processing output, as characteristic values showing approximately a similar tendency to the intra-frame and/or inter-frame prediction processing output, in order to obtain the aforementioned prediction residues.

**9.** The picture encoding apparatus according to claim 8 wherein said code volume predicting means uses the result of the intra-frame approximate value processing output or the result of the inter-frame approximate value processing output, whichever is smaller, as said prediction residues.

**10.** The picture encoding apparatus according to claim 9 wherein said code volume predicting means predicts an unknown volume of codes generated of a picture now to be encoded, using known prediction residues and a known volume of codes generated of a picture already encoded and said prediction residues as obtained of the picture now to be encoded.

**11.** The picture encoding apparatus according to claim 8 wherein said prediction residues, based on which the code volume predicting means predicts the volume of codes generated, are obtained by intra-frame approximate value collecting means or inter-frame approximate value collecting means, provided outside of said encoding means.

**12.** The picture encoding apparatus according to claim 8 wherein said prediction residues, based on which the code volume predicting means predicts the volume of codes generated, are obtained by intra-frame approximate value collecting means or inter-frame approximate value collecting means, provided within said encoding means.

**13.** The picture encoding apparatus according to claim 8 wherein, in case at least one of said intra-frame approximate value processing output and the inter-frame approximate value processing output is used, said code volume predicting means first corrects the approximate value processing output and then acquires said prediction residues to predict the volume of codes generated based on said prediction residues.

**14.** The picture encoding apparatus according to claim 8 wherein, in case a decimated value is used as at least one of said intra-frame approximate value processing output and the inter-frame approximate value processing output, said code volume predicting means first corrects the decimated value and then acquires said prediction residues to predict the volume of codes generated based on said prediction residues.

**15.** The picture encoding apparatus according to claim 1 or 8 wherein said control means uses the predicted volume of codes generated for controlling the picture quality, rate and/or the compression ratio in said encoding means.

**16.** The picture encoding apparatus according to claim 2 or 9 wherein, at a leading end of a sequence, said code volume predicting means predicts an unknown volume of codes generated of a picture now to be encoded, from the prediction residues as obtained of the picture now to be encoded, using a prediction function.

**17.** The picture encoding apparatus according to claim 2 or 9 wherein, in case of a scene change, said code volume predicting means predicts an unknown volume of codes generated of a picture now to be encoded, by performing correction processing on the prediction residues as obtained of the picture now to be encoded.

**18.** The picture encoding apparatus according to claim 16 or 17 wherein, in case of a scene change, said code volume predicting means applies a prediction function to the prediction residues as obtained of the picture now to be encoded, in order to predict the unknown volume of codes generated of the picture now to be encoded, said prediction function being the same as that used at the leading end of the sequence.

**19.** The picture encoding apparatus according to claim 1, 8, 17 or 18 wherein the prediction residues obtained by said code volume predicting means are used for detecting a scene change.

**20.** The picture encoding apparatus according to claim 19 wherein the volume of codes generated, as predicted by said prediction function in case of the scene change, and the information pertaining to the prediction residues used for scene change detection, are used for editing processing.

**21.** A picture encoding method comprising

an encoding step of applying compression encoding processing, rich in predictions, employing orthogonal transform and motion compensation, to an input picture signal;

a code volume predicting step of predicting the volume of codes generated, said code volume predicting step predicting the volume of codes generated in said encoding step based on prediction residues obtained on applying intra-frame and/or inter-frame predictive processing to said input picture signal; and

a control step of employing the volume of codes generated, as predicted by said code volume predicting step, for controlling the encoding processing in said encoding step.

**22.** The picture encoding method according to claim 21 wherein said code volume predicting step uses intra-frame prediction residues of an intra-frame predicted picture, with respect to said input picture, as being the result of said intra-frame predictive processing, or inter-frame prediction residues of an inter-frame predicted picture, with respect to said input picture, as being the result of said inter-frame predictive processing, whichever are smaller, as said prediction residues.

**23.** The picture encoding method according to claim 21 wherein said code volume predicting step predicts an unknown volume of codes generated of a picture now to be encoded, using known prediction residues and a known volume of codes generated of a picture already encoded and said prediction residues as obtained of the picture now to be encoded.

**24.** The picture encoding method according to claim 21 wherein said code volume predicting step uses, in addition to using the aforementioned intra-frame and/or inter-frame prediction processing output, an intra-frame approximate value processing output and/or an inter-frame approximate value processing output, as characteristic values showing approximately a similar tendency to the results of the intra-frame and/or inter-frame prediction processing, in order to obtain the aforementioned prediction residues.

**25.** The picture encoding method according to claim 24 wherein said code volume predicting step uses the result of the intra-frame approximate value processing or the result of the inter-frame approximate value processing, whichever is smaller, as said prediction residues.

**26.** The picture encoding method according to claim 25 wherein said code volume predicting step predicts an unknown volume of codes generated of a picture now to be encoded, using known prediction residues and a known volume of codes generated of a picture already encoded and said prediction residues as obtained of the picture now to be encoded.

**27.** The picture encoding method according to claim 24 wherein, in case at least one of said intra-frame approximate value processing output and the inter-frame approximate value processing output is used, said code volume predicting step first corrects the approximate value processing output and then acquires said prediction residues to predict the volume of codes generated based on said prediction residues.

**28.** The picture encoding method according to claim 24 wherein, in case a decimated value is used as at least one of said intra-frame approximate value processing output and the inter-frame approximate value processing output, said code volume predicting step first corrects the decimated value and then acquires said prediction residues to predict the volume of codes generated based on said prediction residues.

**29.** The picture encoding method according to claim 22 or 25 wherein said control step uses the predicted volume of codes generated for controlling the picture quality, rate and/or the compression ratio in said encoding step.

**30.** The picture encoding method according to claim 23 or 26 wherein, at a leading end of a sequence, said code volume predicting step predicts an unknown volume of codes generated of a picture now to be encoded, from the prediction residues as obtained of the picture now to be encoded, using a prediction function.

**31.** The picture encoding method according to claim 23 or 26 wherein, in case of a scene change, said code volume predicting step predicts an unknown volume of codes generated of a picture now to be encoded, by performing correction processing on the prediction residues as obtained of the picture now to be encoded.

**32.** The picture encoding method according to claim 30 or 31 wherein, in case of a scene change, said code volume predicting step applies a prediction function to the prediction residues as obtained of the picture now to be encoded, in order to predict the unknown volume of codes generated of the picture now to be encoded, said prediction function being the same as that used at the leading end of the sequence.

**33.** The picture encoding method according to any one of claims 22, 24, 25 and 32 wherein the prediction residues obtained by said code volume predicting step are used for detecting a scene change.

**34.** The picture encoding method according to claim 33 wherein the volume of codes generated, as predicted by said prediction function in case of the scene change, and the information pertaining to the prediction residues used for scene change detection, are used for editing processing.

**35.** A program for picture encoding, executed on a computer, said program comprising

an encoding step of applying compression encoding processing, rich in predictions, employing orthogonal transform and motion compensation, to an input picture signal;

a code volume predicting step of predicting the volume of codes generated, said code volume predicting step predicting the volume of codes generated in said encoding step based on prediction residues obtained on applying intra-frame and/or inter-frame predictive processing to said input picture signal; and

a control step of employing the volume of codes generated, as predicted by said code volume predicting step, for controlling the encoding processing in said encoding step.

FIG.1

FIG.2

EP 1 555 831 A2

EP 1 555 831 A2

FIG.3

VIN PICTURE TO BE ENCODED

16

INTRA-PREDICTOR

17

INTER-PREDICTOR

VP1

VP2

18a

18b

E1 INTRA-PRIDICTION RESIDUES

E2 INTER-PRIDICTION RESIDUES

18c

18

BD(n)
PREDICTED RESIDUES

# FIG.4

V(n)
PICTURE NOW TO BE
ENCODED

V(n-1)
PICTURE ALEADY
ENCODED

BD(n-1)

| PREDICTION RESIDUES |
|---|

BD(n)

| PREDICTION RESIDUES |
|---|

| VOLUME OF CODES GENERATED |
|---|

BIT(n-1)

| VOLUME OF CODES GENERATED |
|---|

BIT(n)

# FIG.5

FIG.6

Start

Generate intra-predicted picture VP1 — S11

Generate inter-predicted picture VP2 — S12

Generate intra-predicted residues E1 — S13

Generate inter-predicted residues E2 — S14

Use intra-predicted residues E1
or inter-predicted residues E2,
whichever are smaller in absolute value,
as prediction residues BD(n) — S15

End

# FIG.7

FIG.8

EP 1 555 831 A2

FIG.9

EP 1 555 831 A2

EP 1 555 831 A2

**FIG.10**